# EUROPÄISCHE PATENTSCHRIFT

(11) **EP 0 349 829 B1**
(45) Veröffentlichungstag und Bekanntmachung des Hinweises auf die Patenterteilung: **17.04.1996**
(21) Anmeldenummer: 89111232.8
(22) Anmeldetag: 20.06.1989
(51) Int. Cl.: D02J 13/00, D02J 1/22, F16C 27/04, H05B 6/14, F16F 15/32, G01K 13/08

(54) **Galette mit breitem Drehzahlbereich**
Roller with a large rotating speed range
Galette à large champ de vitesse de rotation

(30) Priorität: 30.06.1988 CH 2486/88; 30.06.1988 CH 2485/88; 30.06.1988 CH 2484/88; 30.06.1988 CH 2487/88; 30.06.1988 CH 2488/88; 30.06.1988 CH 2489/88; 30.06.1988 CH 2490/88; 30.06.1988 CH 2491/88; 30.06.1988 CH 2492/88
(43) Veröffentlichungstag der Anmeldung: 10.01.1990
(73) Patentinhaber: MASCHINENFABRIK RIETER AG, CH-8406 Winterthur (CH)
(72) Erfinder: Arnosti, Vittorino, CH-8422 Pfungen (CH); Boos, Konrad, CH-8370 Sirnach (CH); Gemperle, Bruno, CH-8371 Oberwangen (CH); Graf, Felix, CH-8400 Winterthur (CH); Lienhard, Rudolf, CH-8422 Pfungen (CH); Munz, Emil, CH-8442 Hettlingen (CH); Röllin, Richard, CH-8400 Winterthur (CH); Widmer, Rolf, CH-8239 Dörflingen (CH); Wirz, Armin, CH-8475 Ossingen (CH)

(56) Entgegenhaltungen:
- EP-A- 0 109 346
- EP-A- 0 113 407
- CH-A- 397 895
- CH-A- 477 578
- CH-A- 494 952
- CH-A- 498 385
- CH-A- 502 445
- CH-A- 522 214
- DE-A- 1 425 073
- DE-A- 1 564 623
- DE-A- 3 316 764
- DE-A- 3 701 077
- DE-B- 1 066 818
- DE-B- 1 271 308
- DE-B- 1 565 149
- DE-B- 1 575 536
- DE-C- 406 058
- DE-U- 1 617 916
- FR-A- 578 710
- FR-A- 1 545 126
- FR-A- 2 152 310
- FR-A- 2 191 652
- GB-A- 428 832
- GB-A- 620 464
- GB-A- 631 520
- GB-A- 978 163
- GB-A- 1 130 374
- GB-A- 1 204 933
- GB-A- 1 309 836
- GB-A- 2 111 137
- GB-A- 2 141 288
- GB-A- 2 173 867
- NL-A- 6 702 310
- US-A- 2 531 697
- US-A- 2 543 447
- US-A- 3 412 228
- US-A- 3 448 233
- US-A- 3 508 024
- US-A- 3 546 503
- US-A- 3 697 726
- US-A- 3 772 492
- US-A- 3 813 518
- US-A- 3 866 014
- US-A- 3 961 151
- US-A- 4 447 796
- US-A- 4 669 893
- PATENT ABSTRACTS OF JAPAN, Band 11, Nr. 37 (P-543)[2484], 4. Februar 1987; & JP-A-61 207 937 (MITSUBISHI HEAVY IND. LTD) 16-09-1986

## Beschreibung

Die Erfindung bezieht sich auf ein Streckrollenaggregat gemäß dem Oberbegriff des Anspruchs 1 und beispielsweise aus der DE-A-3 701 077 bekannt wie z.B. Solche Geräte für die Filamentbearbeitung sind auch aus DE-A-26 39 458, EP-A-113 407, US-A-3 772 492, GB-A-1 204 933 bekannt.

Ein solches Aggregat umfasst eine drehbare Welle und hat heutzutage einen zulässigen Drehzahlbereich, welcher durch die biegekritische Drehzahl begrenzt ist und zwar derart, dass der zulässigen Bereich
a) unterhalb der zweiten biegekritischen Drehzahl der Welle liegt, und
b) eine "Diskontinuität" an der ersten biegekritischen Drehzahl der Welle aufweist.

Weitere kritische Drehzahlen des Aggregates (z.B. Gestellschwingungen oder Torsionsform der Welle) können durch die Umgebung bzw. der Aufspannung gegeben werden, sind aber meist für die Einschränkung der zulässigen Drehzahl unbedeutend in ihrer Wirkung oder können durch handelsübliche Elemente gedämpft werden.

Die biegekritischen Drehzahlen der Welle, die nachfolgend in der vorliegenden Beschreibung erwähnt sind, werden nur noch als "die kritischen Drehzahlen" bezeichnet.

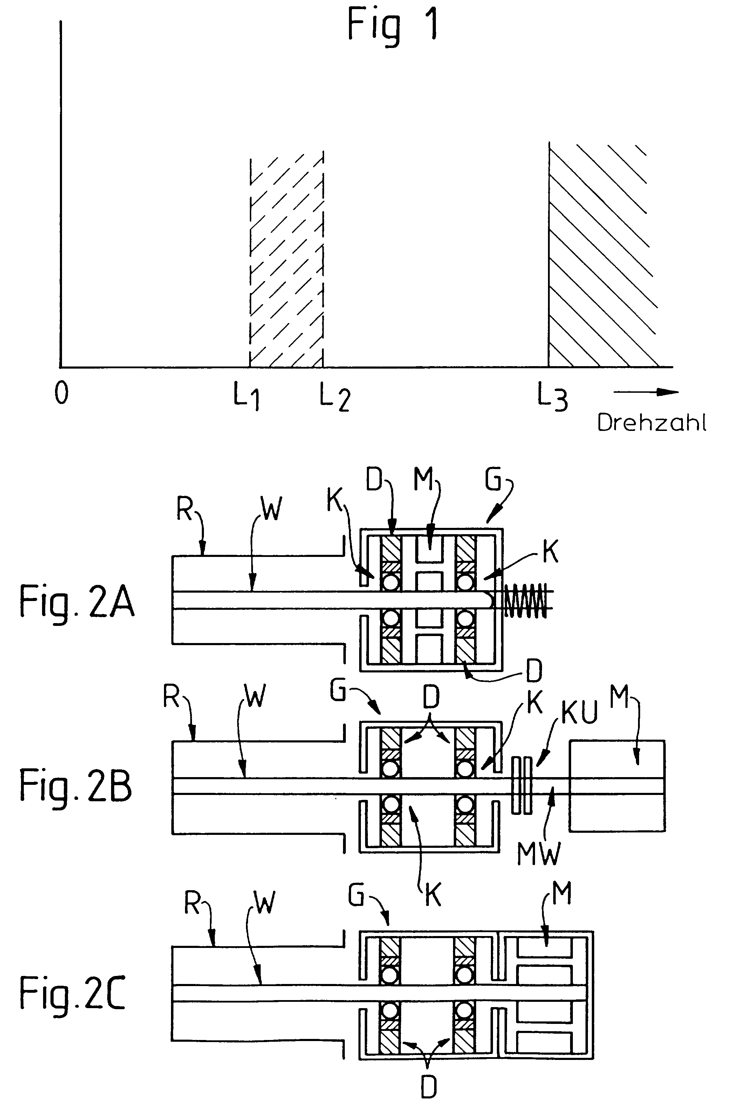

Die Bedeutung dieser Aussage wird nun kurz anhand der Figur 1 weiter erläutert. Dieses Diagramm zeigt bloss eine horizontale Achse mit Drehzahl zwischen O und einem Grenzwert L3. Es sei angenommen, ein Streckrollenaggregat sei für den Einsatz mit Drehzahlen bis zu L3 konstruiert. Dieser Grenzwert ist normalerweise durch die zweite kritische Drehzahl bestimmt, d.h. wenn die Drehzahl der rotierenden Komponenten des Aggregates oberhalb L3 erhöht wird, dann sind Schäden innerhalb eines unakzeptabel kurzen Zeitraumes zu erwarten.

Das Aggregat kann aber nicht ohne weiteres mit einer beliebigen Drehzahl unterhalb des Grenzwertes L3 eingesetzt werden. Innerhalb des Drehzahlbereiches O bis L3 liegt zwar die erste kritische Drehzahl und Schäden sind auch dann unvermeidlich, wenn das Aggregat über einen längeren Zeitraum innerhalb eines Drehzahlbereiches L1 bis L2 um diese erste kritische Drehzahl angetrieben wird, sofern dieses Aggregat nicht sehr genau und mit hohem Aufwand gesamtgewuchtet wurde. Der sichere Betrieb ist aber auch dann nur möglich, wenn die Wuchtgüte erhalten bleibt. Die Betriebsanleitungen solcher Aggregate verlangen daher, dass der Bereich L1 bis L2 nur duchfahren wird, um in den sicheren Bereich L2 bis L3 zu gelangen.

Falls trotzdem ein Betrieb im Bereich L1 bis L2 notwendig würde, müsste regelmässig die Schwingungen des Aggregates gemessen werden, da sich z.B. durch das Aufheizen, eine Verschmutzung oder das Lösen durch Eigenspannungen, die Wuchtgüte sich ändern könnte und damit wieder ein sicherer Betrieb beeinträchtigt wäre.

Ein dauernder Betrieb im Bereich L1 bis L2 ist auf jeden Fall nur dann zulässig, wenn das ganze Aggregat nach dem Zusammenbau nochmals ausgewuchtet wird. Es muss dabei eine sehr hohe Auswuchtgüte erreicht werden. Bei jeder Veränderung am Aggregat (Austausch eines rotierenden Teils) muss der Auswuchtvorgang wiederholt werden, was eine erhebliche Erschwernis beim Betrieb solcher Aggregate bedeutet. Auch muss sichergestellt bzw. überprüft werden, dass sich die Auswuchtgüte z.B. durch thermische Einwirkungen (beheizte Streckrolle) nicht im Laufe der Zeit verschlechtert, was dann zu unzulässigen Schwingungen und ev. Schäden führen kann.

Durch geeignete Massnahmen (insbesondere durch Schwingungsdämpfung in der Halterung zwischen dem Aggregat und dem tragenden Gestell) hat man bislang versucht,
- den Grenzwert L3 zu erhöhen,
- den Resonanzbereich L1 bis L2 möglichst eng zu machen,
- Schwingungen des ganzen Aggregates zu vermindern.

Trotzdem hat bislang jedes uns bekannte Streckrollenaggregat eine mehr oder weniger breite "verbotene Drehzahlzone" unterhalb der maximalen Drehzahl, was dessen Einsatz für gewisse Anwendungen einschränkt. Weiter ist es bislang notwendig gewesen, sowohl die einzelnen rotierenden Teile des Aggregates wie auch das Aggregat als ganzes auszuwuchten. Dies ist mühsam und aufwendig, nicht nur bei der Herstellung sondern auch bei der Wartung (Einsetzen eines Ersatzteiles) oder Anpassung des Aggregates.

Aus der DE-3701077A1 ist eine Galetteneinheit mit direktem Galettenantrieb bekannt, welche aus einem Galettenmantel und einem diesen Galettenmantel antreibenden Elektromotor besteht. Der Rotor des Elektromotors und der Galettenmantel sitzen drehfest jeweils auf einem Ende einer für beide gemeinsamen Welle, die in ihrem Mittelbereich in Lagern gelagert ist. Die Galettenheizung und das Gehäuse mit Feldwicklung des Elektromotors sind auf den gegenüberliegenden Seiten der die Lager aufnehmenden Maschinenwand befestigt. Die kritische Wellendrehzahl soll sicher ausserhalb des Bereichs der Betriebsdrehzahl liegen. Zur Erhöhung der kritischen Drehzahl wurde am motorenseitigen Wellenende der Galettenwelle ein Hilfslager vorgesehen, das im Motorengehäuse abgestützt ist. Diese Abstützung geschah vorzugsweise elastisch und/oder gedämpft.

Die Erfinder haben nun festgestellt, dass es möglich ist, Schwingungen eines Streckrollenaggregates derart zu dämpfen, dass der zulässige Drehzahlbereich kontinuierlich bis zu einem oberen Grenzwert verläuft und auf das Auswuchten des Aggregates als ganzes verzichtet werden kann. Die Vorteile werden aus der obigen Beschreibung ganz offensichtlich sein.

Ein Streckrollenaggregat gemäss dieser Erfindung umfasst eine heizbare Galette für die Filamentbearbeitung, einen elektromotorischen Antrieb für den Antrieb der Galette, ein stationäres Lagergehäuse zur Aufnahme einer darin in Drehlagern gelagerten Welle, wobei an der einen Stirnseite des Lagergehäuses der Antrieb und an der anderen Stirnseite die Galette mit der Welle verbunden sind und die Drehlager in axialer Richtung voneinander beabstandet sind, und kennzeichnet sich dadurch, dass Mittel zur Schwingungsdämpfung je zwischen den Drehlagern und dem Lagergehäuse vorgesehen sind.

Die Erfindung unterscheidet sich von der in der DE-A-2 639 458 beschriebenen Galette dadurch, dass der erste kritische Bereich nicht verschoben wird, sondern mit dem normalen Einsatzbereich zusammengelegt wird.

Dabei sind grundsätzlich drei Varianten der Gesamtanordnung möglich, wie nun anhand der in Figur 2 gezeigten Skizzen erläutert wird. In allen drei Skizzen (Fig 2A, Fig 2B und 2C) ist das fadenaufnehmende Element (die "Rolle") mit R bezeichnet und dieses Element ist auf einer Welle W montiert, sodass diese zwei Elemente zusammen einen rotierenden Teil bilden. Dieser Teil wird in Betrieb in allen drei Varianten durch einen Motor M in Rotation um die Achse der Welle W versetzt. Dabei ist der rotierende Teil in allen drei Varianten über einem Wälzlager K (oder ein anderes geeignetes Lager) in einer Halterung oder einem Lagergehäuse G getragen. Die drei Varianten unterscheiden sich nur in der Position des Motors gegenüber der Lagerung:
- in Fig. 2A befindet sich der Motor (bestehend aus einem Stator am Gehäuse G und Rotor auf der Welle W) im Gehäuse G zwischen zwei Wälzlagern,
- in Fig. 2B befindet sich der Motor ausserhalb des Gehäuses G, und die Motorwelle MW ist mit der Rollenwelle W über eine Kupplung Ku koppelbar,
- in Fig. 2C ist die Welle W ausserhalb des Gehäuses G verlängert und der Motor M ist direkt am Gehäuse montiert, so dass der Rotor nochmals (wie in der Variante der Fig. 2A) auf der Welle W aufgebracht werden kann.

In allen drei Varianten ist die Schwingungsdämpfung D unmittelbar zwischen dem Lager K und dem Gehäuse G montiert. Dadurch werden nicht nur die Vibrationen sondern auch die unwuchtbedingten Lagerlasten tief gehalten und so die Lebensdauer verlängert. Die Erfindung bezieht sich auf Anordnungen zur Schwingungsdämpfung. In diesem Zusammenhang sind die folgenden weiteren Einleitungen angebracht.

Bei der Lagerung von rotierenden Wellen durch Wälzlager sind die dabei auftretenden negativen Erscheinungen hinreichend bekannt. Fabrikationsbedingt entstehen geringe Rundlauffehler an der Welle oder den rotierenden Teilen. Diese führen stets zu unerwünschten Vibrationen bzw. Schwingungen der Welle, die über das Lager zunächst auf das Gehäuse übertragen werden. Derartige Schwingungen können die Lebensdauer der gesamten Anordnung stark vermindern oder sogar zu einem Bruch der Welle führen.

Zur Dämpfung derartiger Schwingungen sind verschiedene Lösungen bekannt geworden. In einfachster Weise lässt sich eine Schwingungsdämpfung durch die Einschaltung gummielastischer Werkstoffe herbeiführen, wie z.B. in der DE-A-26 39 458 gezeigt wurde. Allerdings ist dabei zu berücksichtigen, dass derartige Werkstoffe nicht für alle Anwendungen geeignet sind, da Gummi in der Regel nur eine relativ geringe Temperaturbeständigkeit besitzt und mehr oder weniger stark durch Schmiermittel und erst recht durch aggressive Medien angegriffen wird.

Das erfindungsgemäße Streckrollenaggregat weist eine beheizbare Galette für die Filamentbearbeitung auf, bei der die Galette durch eine Welle in Drehung versetzbar ist, bei der die Welle in einer Lageranordnung geführt ist und bei der in der Lageranordnung Mittel zur Schwingungsdämpfung vorgesehen sind.

Das Lager ist in einer federnd in einem Gehäuse angeordneten Lagerbüchse eingespannt und die Büchse von einem engen Spalt umgeben. Der Spalt kann mit Flüssigkeit gefüllt werden. Auf diese Weise werden Wellenschwingungen bzw. Vibrationen der Welle zwar auf die Lagerbüchse übertragen, gelangen aber durch die gefederte Lagerung der Büchse nur sehr gedämpft zum Gehäuse.

In besonders vorteilhafter und einfacher Weise ist die Lagerbüchse über O-Ringe am Gehäuse abgestützt. Die an sich schon sehr temperaturstabilen O-Ringe werden zudem keinen extrem hohen Temperaturen ausgesetzt, da die Lagerbüchse einen Teil der im Lager erzeugten Reibungswärme abführt.

Durch die O-Ringe ist ein Ringspalt zwischen dem Gehäuse und der Lagerbüchse begrenzt, der vorzugsweise mit einer Druckölquelle verbunden ist. Auf diese Weise wird bei einer Radialschwingung der Büchse durch Oelverdrängung eine Dämpfwirkung erzeugt.

Nach dem bisher geschilderten Aufbau des erfindungsgemässen Streckrollenaggregates ist die Lagerbüchse in der Lage, zumindest radiale Relativbewegungen gegenüber dem Gehäuse auszuführen. In einer weiteren vorteilhaften Ausgestaltung des Erfindungsgegenstandes ist nunmehr vorgesehen, zwischen dem Gehäuse und der Lagerbüchse im wesentlichen koaxial zur Welle Federstifte anzuordnen, die die Lagerbüchse zentrieren und auch unter Radiallast ein Anschlagen der Büchse verhindern. Zu diesem Zweck ist jeder Federstift mit dem einen Ende im Gehäuse und mit dem anderen Ende in der Lagerbüchse verankert. Zur besseren Ausnutzung der Federeigenschaften der Stifte liegt jeweils ein mittlerer Abschnitt des Federstiftes mit radialen Spiel in einer Ausnehmung der Lagerbüchse.

In diesem Zusammenhang ist es besonders einfach und vorteilhaft, die dem Gehäuse zugewandte Stirnfläche der Lagerbüchse mit einer Umfangsnut zur Aufnahme der Federstifte zu versehen. Eine derartige Nut ist einfach herstellbar. Alternativ ist es jedoch denkbar, in der Lagerbüchse für jeden Federstift eine Bohrung vorzusehen, in der der nicht eingespannte Bereich des Federstiftes liegt, so dass bei Relativbewegungen zwischen der Lagerbüchse und dem Gehäuse ein Anschlagen des Stiftes an der Lagerbüchse verhindert ist.

Vorteilhafterweise sind dabei mehrere Federstifte in regelmässigen Winkelabständen in der Lagerbüchse verankert.

Die Lagerbüchse kann einen im wesentlichen L-förmigen Querschnitt haben, so dass das Lager problemlos zu montieren ist und im eingebauten Zustand mit einer relativ grossen Fläche der Umgebungstemperatur ausgesetzt ist, wodurch erhebliche Vorteile hinsichtlich der Kühlung entstehen.

Es hat sich als zweckmässig erwiesen, wenn die eingespannten Enden jedes Federstiftes etwa gleich lang sind.

Die Lager der Lageranordnung können über ein Drahtgeflecht am Lagergehäuse abgestützt sein. Auf diese Weise entsteht eine kostengünstige aber wirksame Anordnung zur Schwingungsdämpfung von Galetten, die einfach herzustellen und zu montieren ist, völlig wartungsfrei ist und bei jeder Temperatur sicher ihren Dienst verrichtet.

Zu einer besonders vorteilhaften Ausgestaltung des Erfindungsgegenstandes gelangt man, wenn in der Lageranordnung mindestens zwei in einem Axialabstand zueinander angeordnete Lager vorgesehen sind. Eine derartige Ausgestaltung führt zu einer sehr wirksamen Schwingungsdämpfung, wobei der konstruktive Mehraufwand durch eine sehr grosse Lagerlebensdauer mehr als ausgeglichen wird.

Besonders vorteilhaft ist es ferner, wenn das Drahtgeflecht zu einem Ringkörper geformt ist, der zwischen dem äusseren Lagerring und dem Gehäuse angeordnet ist. Der Aus- und Einbau des Drahtgeflechts ist in einfachster Form durchführbar.

Vorteilhafterweise lässt sich der Ringkörper aus mehreren Ringsegmenten zusammenbauen, so dass schadhaft gewordene Segmente einzeln gegen neue austauschbar sind. Bei einer derartigen Ausgestaltung kann es vorteilhaft sein, wenn zwischen den Ringsegmenten Zwischenräume vorgesehen sind, so dass auch Massänderungen bei extrem hohen Temperaturen ausgeglichen werden.

Die Erfindung kann beispielsweise auch so ausgeführt sein, dass zwischen dem Lageraussenring und den Ringsegmenten eine Büchse angeordnet ist.

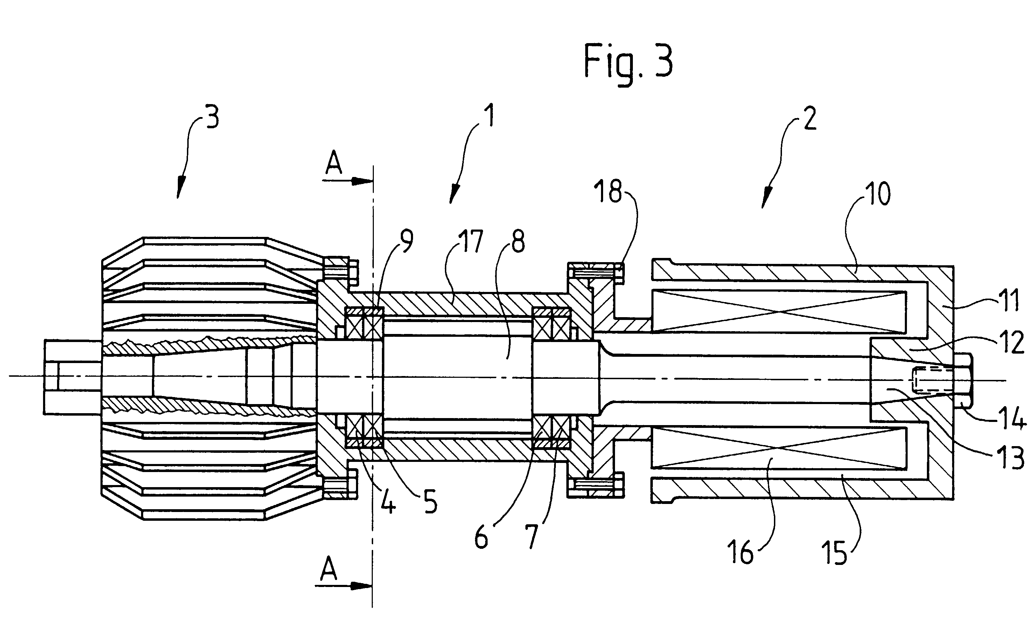

Beispiele von Anordnungen der Erfindung werden nun anhand der weiteren Figuren der Zeichnungen erläutert werden, wobei es zeigen:
Fig 3
   ein Streckrollenaggregat gemäss Fig. 2C mit einer Lageranordnung gemäss dem zweiten Zusatz aspekt zwischen einer schematisch dargestellten Galette und einem elektromotorischen Antrieb,
Fig. 4
   einen Schnitt durch die Lageranordnung nach Fig. 3, gemäss der strichpunktierten Linie A - A, letzterer Figur,
Fig. 5
   ein Schnittbild einer Lageranordnung gemäss dem ersten Zusatzanspekt zur Verwendung in einem Streckrollenaggregat, gemäss einer der in Fig. 2 gezeigten Varianten,

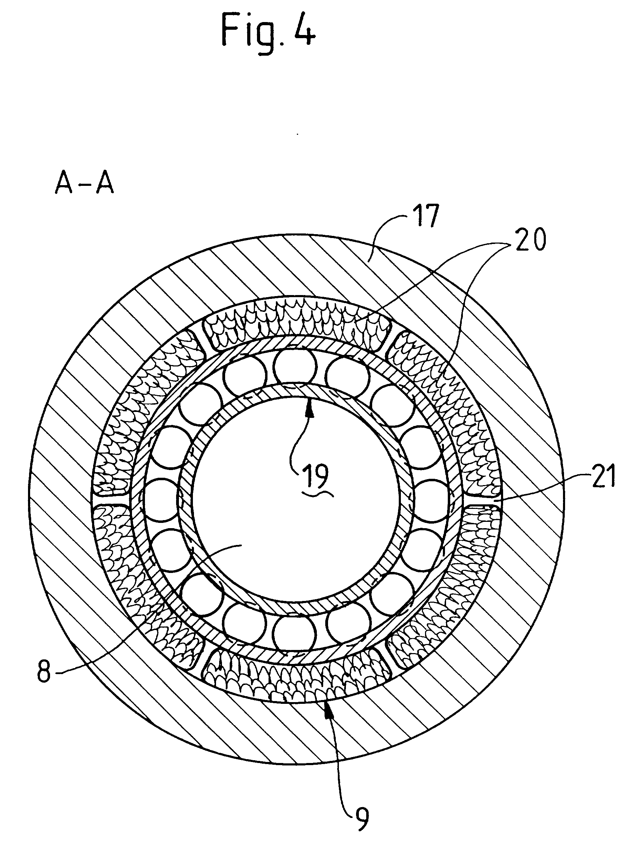

In Fig. 3 und 4 sind einander entsprechende Teile mit den gleichen Bezugszeichen versehen.

In der prinzipiellen Schnittdarstellung nach Fig. 4 befindet sich ein Lagergehäuse 1 zwischen einer schematisch gezeigten Galette 2 und einem Elektromotor 3. Im Lagergehäuse 1 sind insgesamt vier Wälzlager 4, 5, 6, 7 zur Lagerung einer Welle 8 vorgesehen. Jeweils zwei Lager 4, 5 und 6, 7 sind parallel zueinander angeordnet und befinden sich in den axialen Endabschnitten des Lagergehäuses 1. Die Wälzlager 4, 5, 6, 7 sind über Drahtgeflechte 9 radial am Lagergehäuse 1 abgestützt, so dass Wellenschwingungen im Betrieb der Galette 2 wirksam gedämpft werden.

Die Galette 2 besteht im wesentlichen aus einer zylindrischen Mantelwand 10, die einseitig offen ist und an dem in der Darstellung rechten Ende durch eine Stirnwand 11 verschlossen ist. An der Stirnwand 11 ist eine Nabe 12 angeformt, in der ein konusförmiger Endabschnitt 13 der Welle 8 hineinragt, wobei die Welle 8 mittels einer Schraube 14 axial mit der Stirnwand 11 verbunden ist. Durch die zylindrische Mantelwand 10, die scheibenförmige Stirnwand 11 und die Welle 8 wird somit ein Umfangsringraum 15 gebildet, in dem eine stationäre Heizvorrichtung 16 untergebracht ist. Die stationäre Heizvorrichtung 16 ist am Gehäuse 17 der Galette 2 befestigt, das seinerseits am Lagergehäuse 1 angeflanscht und mittels Schrauben 18 am Lagergehäuse 1 befestigt ist.

Der in Fig. 4 dargestellte Schnitt entlang der strichpunktierten Linie A-A nach Fig. 3 zeigt in einem gegenüber Fig. 3 vergrösserten Massstab ein Ausführungsbeispiel mit einem Kugellager 19, durch das die Welle 8 hindurchgeführt ist und das radial aussen an einem Drahtgeflecht 9 abgestützt ist, wobei das Drahtgeflecht 9 als ein aus mehreren Ringsegmenten 20 zusammengesetzter Ringkörper ist; zwischen den Ringsegmenten 20 sind Zwischenräume 21 vorgesehen.

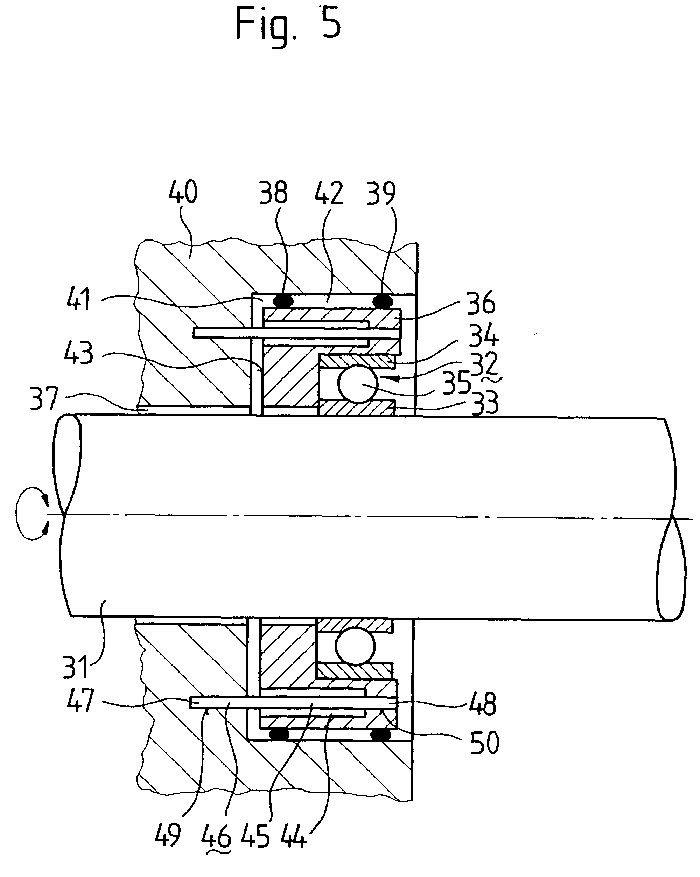

In Fig. 5 ist mit 31 eine Welle bezeichnet, die beispielsweise durch einen nicht dargestellten elektromotorischen Antrieb in Drehung versetzbar ist, wobei die Drehrichtung der Welle 31 nicht von Bedeutung ist. Auf der Welle 31 sitzt ein Kugellager 32, das im wesentlichen aus einem inneren Lagerring 33, einem äusseren Lagerring 34 und den zwischen den Lagerringen 33, 34 angeordneten Wälzkörper 35 besteht.

Das Kugellager 32 sitzt seinerseits in einem Presssitz in einer Lagerbüchse 36, die im wesentlichen einen L-förmigen Querschnitt besitzt, wobei die Lagerbüchse 36 einen solchen Durchmesser hat, dass zwischen der Lagerbüchse 36 und der Welle 31 ein Spalt 37 entsteht und eine Berührung der genannten Teile 31, 36 ausgeschlossen ist.

Die äussere radiale Begrenzungsfläche der Lagerbüchse 36 stützt sich über zwei O-Ringe 38, 39 an einem Gehäuse 40 ab, so dass zwischen der äusseren radialen Begrenzungsfläche der Lagerbüchse 36 und dem Gehäuse 40 ein Umfangsspalt 41 entsteht. Die beiden O-Ringe 38, 39 sind in einem vorgegebenen Radialabstand zueinander angeordnet, wodurch ein Umfangsringraum 42 entsteht, der beispielsweise mit einer nicht dargestellten Druckölquelle verbunden ist. Zu diesem Zweck können geeignete Bohrungen (nicht gezeigt) im Gehäuse 40 vorgesehen werden. Zu dem gezeigten Ausführungsbeispiel ist zwischen der in der Darstellung linken Stirnfläche 43 der Lagerbüchse 36 und dem Gehäuse 40 ebenfalls ein Spalt vorhanden. Von dieser Stirnfläche 43 geht ferner eine Umfangsnut 44 aus, in der der mittlere Bereich 45 eines Federstiftes 46 liegt. Die Enden 47, 48 des Federstiftes 46 sind im Gehäuse 40 bzw. in der Lagerbüchse verankert, wobei der Federstift 46 beispielsweise koaxial zur Welle 31 liegt. Zur Verankerung der Enden des Federstiftes 46 sind im Gehäuse 40 und in der Lagerbüchse 36 Bohrungen 49, 50 vorgesehen, in die der Federstift 46 mit seinem Enden 47, 48 eingepresst ist. Anstelle der Umfangsnut 44 können ebensogut Sackbohrungen in der Lagerbüchse 36 vorgesehen sein.

Im Betrieb der beschriebenen Anlage, gemäss Fig. 5, werden die aus einem unrunden Lauf der Welle 31 folgenden Vibrationen auf die Lagerbüchse 36 übertragen. Die O-Ringe 38, 39, die Federstifte 46 und das im Umfangsringraum 42 eingeschlossene Drucköl sorgen allerdings dafür, dass die Vibrationen nur stark gedämpft auf das Gehäuse 40 übertragen werden. Der Lauf der Welle 31 wird insgesamt beruhigt, wodurch unmittelbar eine verminderte Lagerbeanspruchung eintritt.

## Patentansprüche

1. Ein Streckrollenaggregat umfassend
- eine heizbare Galette (2) für die Filamentbearbeitung,
- einen elektromotorischen Antrieb (3) für den Antrieb der Galette (2),
- ein stationäres Lagergehäuse (1,40) zur Aufnahme einer darin in Drehlagern (32) gelagerten Welle (8,31), wobei an der einen Stirnseite des Lagergehäuses (1,40) der Antrieb (3) und an der anderen Stirnseite die Galette (2) mit der Welle (8,31) verbunden sind und
- die Drehlager in axialer Richtung voneinander beabstandet sind,
dadurch gekennzeichnet,
- dass Mittel zur Schwingungsdämpfung je zwischen den Drehlagern und dem Lagergehäuse vorgesehen sind.

2. Streckrollenaggregat nach Anspruch 1, dadurch gekennzeichnet, dass zusätzlich Mittel zur Zentrierung der Welle vorgesehen sind, z.B. Federstifte.

3. Streckrollenaggregat nach Anspruch 1, dadurch gekennzeichnet, dass die Mittel zur Dämpfung der Wellenausschläge, zwischen dem Drehlager (32,36) und dem Lagergehäuse (1,40) befindliche O-Ringe (38,39) umfassen, welche mit einem Abstand zueinander angeordnet, einen Umfangsringraum (42) begrenzen.

4. Streckrollenaggregat nach Anspruch 3, dadurch gekennzeichnet, dass der Umfangsringraum (42) mit einem Dämpfungselement gefüllt ist.

5. Streckrollenaggregat nach Anspruch 3 oder 4, dadurch gekennzeichnet, dass der Umfangsringraum (42) mit einer Druckoelquelle verbunden ist.

6. Streckrollenaggregat nach Anspruch 1 oder 2, dadurch gekennzeichnet, dass die Mittel zur Schwingungsdämpfung der Welle ein Drahtgeflecht sind.

7. Streckrollenaggregat nach Anspruch 6, dadurch gekennzeichnet, dass das Drahtgeflecht (9) zu einem Ringkörper geformt ist.

8. Streckrollenaggregat nach Anspruch 7, dadurch gekennzeichnet, dass der Ringkörper (9) aus mehreren Segmenten (20) zusammengefügt ist.

9. Streckrollenaggregat nach Anspruch 8, dadurch gekennzeichnet, dass zwischen den Segmenten (29) Zwischenräume (21) vorgesehen sind.

10. Streckrollenaggregat nach Anspruch 9, dadurch gekennzeichnet, dass zwischen Lageraussenring und den Ringsegmenten (20) eine Büchse angeordnet ist.

11. Streckrollenaggregat nach Anspruch 2, dadurch gekennzeichnet, dass zwischen dem Gehäuse (40) und der Lagerbüchse (36), im wesentlichen koaxial zur Welle (31), Federstifte (46) angeordnet sind, und dass jeder Federstift (46) mit dem einen Ende im Gehäuse (40) und mit dem anderen Ende in der Lagerbüchse (36) verankert ist.

12. Streckrollenaggregat nach Anspruch 11, dadurch gekennzeichnet, dass ein mittlerer Abschnitt jedes Federstiftes (46) mit radialem Spiel in einer Ausnehmung (44) der Lagerbüchse (36) liegt.

13. Streckrollenaggregat nach Anspruch 11 oder 12, dadurch gekennzeichnet, dass die dem Gehäuse (40) zugewandte Stirnfläche der Lagerbüchse (36) mit einer Umfangsnut zur Aufnahme der Federstifte (46) versehen ist.

14. Streckrollenaggregat nach Anspruch 11 oder 12, dadurch gekennzeichnet, dass in der Lagerbüchse (36) für jeden Federstift (46) eine Sackbohrung vorgesehen ist.

15. Streckrollenaggregat nach einem der Ansprüche 11 bis 14, dadurch gekennzeichnet, dass mehrere Federstifte (46) in regelmässigen Winkelabständen in der Lagerbüchse (36) verankert sind.

16. Streckrollenaggregat nach einem der Ansprüche 11 bis 15, dadurch gekennzeichnet, dass die Lagerbüchse (36) im wesentlichen einen L-förmigen Querschnitt besitzt.

17. Streckrollenaggregat nach einem der Ansprüche 11 bis 16, dadurch gekennzeichnet, dass die der Einspannstelle der Federstifte (46) zugewandte Stirnfläche der Lagerbüchse über gummielastische Körper am Gehäuse abgestützt ist.

18. Streckrollenaggregat nach einem der Ansprüche 11 bis 17, dadurch gekennzeichnet, dass die Enden der Federstifte (46) in das Gehäuse (40) und in die Lagerbüchsen (36) eingepresst sind.

19. Streckrollenaggregat nach einem der Ansprüche 11 bis 18, dadurch gekennzeichnet, dass zwischen dem Gehäuse (40) und einer dem Gehäuse zugewandten Stirnfläche der Lagerbüchse (36) ein Axialspalt vorhanden ist.

20. Streckrollenaggregat nach einem der Ansprüche 1-19, dadurch gekennzeichnet, dass das Streckrollenaggregat als Ganzes nicht ausgewuchtet ist.

21. Streckrollenaggregat nach einem der Ansprüche 1-20, dadurch gekennzeichnet, dass die genannten Mittel derart vorgesehen sind, dass das Streckrollenaggregat mit seiner ersten biegekritischen Drehzahl betreibbar ist.

## Claims

1. A draw roller unit comprising
- a heatable galette (2) for filament processing;
- an electromotive drive (3) for the drive of the galette (2);
- a stationary bearing casing (1, 40) for receiving a shaft held therein in roller bearings (32), with the drive (3) being connected with the shaft (8, 31) on the one face side of the bearing casing (1, 40) and the galette (2) with the shaft (8, 31) on the other face side and
- the roller bearings are mutually distanced in the axial direction,
characterized in that
- means for vibration absorption are each provided between the roller bearings and the bearing casing.

2. A draw roller unit as claimed in claim 1, characterized in that means for centering the shaft are provided in addition, e.g. spring pins.

3. A draw roller unit as claimed in claim 1, characterized in that the means for damping the shaft excursions comprise O-rings (38, 39) which are situated between the roller bearings (32, 36) and the bearing casing (1, 40) and, with their arrangement at a distance from one another, limit a circumferential annular space (42).

4. A draw roller unit as claimed in claim 3, characterized in that the circumferential annular space (42) is filled with a damping element.

5. A draw roller unit as claimed in claim 3 or 4, characterized in that the circumferential annular space (42) is connected to a compressed oil source.

6. A draw roller unit as claimed in claim 1 or 2, characterized in that the means for vibration absorption of the shaft are a wire mesh.

7. A draw roller unit as claimed in claim 6, characterized in that the wire mesh (9) is formed into an annular body.

8. A draw roller unit as claimed in claim 7, characterized in that the annular body (9) is composed of several segments (20).

9. A draw roller unit as claimed in claim 8, characterized in that intermediate spaces (21) are provided between the segments (20).

10. A draw roller unit as claimed in claim 9, characterized in that a bushing is arranged between the outer ring of the bearing and the ring segments (20).

11. A draw roller unit as claimed in claim 2, characterized in that spring pins (46) are arranged substantially coaxially to the shaft (31) between the casing (40) and the bushing (36) of the bearing and that each spring pin (46) is fastened with the one end in the casing (40) and with the other end in the bushing (36) of the bearing.

12. A draw roller unit as claimed in claim 11, characterized in that a central section of each spring pin (46) lies with a radial play in a recess (44) of the bushing (36) of the bearing.

13. A draw roller unit as claimed in claim 11 or 12, characterized in that the face side of the bushing (36) of the bearing facing the casing (40) is provided with a circumferential groove for receiving the spring pins (46).

14. A draw roller unit as claimed in claim 11 or 12, characterized in that a pocket bore is provided in the bearing bushing (36) for each spring pin (46).

15. A draw roller unit as claimed in one of the claims 11 to 14, characterized in that several spring pins (46) are fastened at regular angular distances in the bearing bushing (36).

16. A draw roller unit as claimed in one of the claims 11 to 15, characterized in that the bearing bushing (36) is provided with a substantially L-shaped cross section.

17. A draw roller unit as claimed in one of the claims 11 to 16, characterized in that the face side of the bearing bushing facing the clamping position of the spring pins (46) is supported on the casing through rubber-elastic bodies.

18. A draw roller unit as claimed in one of the claims 11 to 17, characterized in that the ends of the spring pins (46) are pressed into the casing (40) and into the bearing bushings (36).

19. A draw roller unit as claimed in one of the claims 11 to 18, characterized in that an axial gap is present between the casing (40) and a face side of the bearing bushing (36) facing the casing.

20. A draw roller unit as claimed in one of the claism 1 to 19, characterized in that the draw roller unit in its entirety is not balanced out.

21. A draw roller unit as claimed in one of the claims 1 to 20, characterized in that the said means are provided in such a way that the draw roller unit is drivable with its first critical bending speed.

## Revendications

1. Ensemble d'un rouleau d'étirage comprenant
- un galet chauffé (2) pour le traitement des filaments,
- un entraînement électro-moteur (3) pour l'entraînement du galet (2),
- un carter stationnaire de paliers (1, 40) pour la réception d'un arbre (8, 31) maintenu dans le carter par des paliers de rotation (32), et où l'arbre (8, 31) est relié, dans une face frontale du carter de paliers (1, 40), avec l'entraînement (3) et, dans l'autre face frontale, avec le galet (2), et
- les paliers de rotation sont séparés en distance l'un de l'autre dans le sens axial,
caractérisé par le fait que,
- entre chacun des paliers de rotation et carter de paliers, des moyens sont prévus pour l'amortissement des vibrations.

2. Ensemble d'un rouleau d'étirage selon revendication 1,
caractérisé par le fait que
des moyens sont en plus prévus pour le centrage de l'arbre, par exemple, des chevilles-ressort.

3. Ensemble d'un rouleau d'étirage selon revendication 1,
caractérisé par le fait que
les moyens servant à l'amortissement des écarts de l'arbre comprennent des anneaux toriques (38, 39) situés entre le palier de rotation (32, 36) et le carter de paliers (1, 40), anneaux qui, en étant disposés à distance l'un par rapport à l'autre, délimitent un espace circonférentiel annulaire (42).

4. Ensemble d'un rouleau d'étirage selon revendication 3,
caractérisé par le fait que
l'espace circonférentiel annulaire (42) est rempli avec un élément d'amortissement.

5. Ensemble d'un rouleau d'étirage selon revendication 3 ou 4,
caractérisé par le fait que
l'espace circonférentiel annulaire (42) est relié avec une source d'huile sous pression.

6. Ensemble d'un rouleau d'étirage selon revendication 1 ou 2,
caractérisé par le fait que
les moyens pour l'amortissement des vibrations de l'arbre sont des treillis de fil métallique.

7. Ensemble d'un rouleau d'étirage selon revendication 6,
caractérisé par le fait que
le treillis de fil métallique (9) est formé en un corps annulaire.

8. Ensemble d'un rouleau d'étirage selon revendication 7,
caractérisé par le fait que
le corps annulaire (9) est composé de plusieurs segments (20).

9. Ensemble d'un rouleau d'étirage selon revendication 8,
caractérisé par le fait que
des espaces intermédiaires (21) sont prévus entre les segments (20).

10. Ensemble d'un rouleau d'étirage selon revendication 9,
caractérisé par le fait
qu'une douille est disposée entre l'anneau extérieur de palier et les segments annulaires (20).

11. Ensemble d'un rouleau d'étirage selon revendication 2,
caractérisé par le fait que
des chevilles-ressort (46) sont disposées entre le carter (40) et la douille de palier (36), d'une manière essentiellement coaxiale à l'arbre (31), et que chaque cheville-ressort (46) est ancrée, à une extrémité, dans le carter (40), et à l'autre extrémité, dans la douille de palier (36).

12. Ensemble d'un rouleau d'étirage selon revendication 11,
caractérisé par le fait
qu'une partie médiane de chaque cheville-ressort (46) est située dans une excavation (44) de la douille de palier (36), avec un jeu radial.

13. Ensemble d'un rouleau d'étirage selon revendication 11 ou 12,
caractérisé par le fait que
la surface frontale de la douille de palier (36), faisant face au carter (40), est pourvue d'une rainure circonférentielle servant à la réception des chevilles-ressort (46).

14. Ensemble d'un rouleau d'étirage selon revendication 11 ou 12,
caractérisé par le fait
qu'un trou borgne est prévu dans la douille de palier (36), pour chaque cheville-ressort (46).

15. Ensemble d'un rouleau d'étirage selon une des revendications 11 à 14,
caractérisé par le fait que
plusieurs chevilles-ressort (46) sont ancrées dans la douille de palier (36), avec des distances angulaires régulières.

16. Ensemble d'un rouleau d'étirage selon une des revendications 11 à 15,
caractérisé par le fait que
la douille de palier (36) possède une section essentiellement en forme de L.

17. Ensemble d'un rouleau d'étirage selon une des revendications 11 à 16,
caractérisé par le fait que
la surface frontale de la douille de palier, faisant face au lieu d'encastrement des chevilles-ressort (46), est supportée par des corps de gomme élastique dans le carter.

18. Ensemble d'un rouleau d'étirage selon une des revendications 11 à 17,
caractérisé par le fait que
les extrémités des chevilles-ressort (46) sont pressées dans le carter (40) et dans la douille de palier (36).

19. Ensemble d'un rouleau d'étirage selon une des revendications 11 à 18,
caractérisé par le fait qu'un espace axial existe entre le carter (40) et une surface frontale de la douille de palier (36) faisant face au carter.

20. Ensemble d'un rouleau d'étirage selon une des revendications 1 à 19,
caractérisé par le fait que
l'ensemble du rouleau d'étirage n'est pas équilibré en tant qu'unité.

21. Ensemble d'un rouleau d'étirage selon une des revendications 1 à 20,
caractérisé par le fait que
lesdits moyens sont prévus de telle sorte que l'ensemble du rouleau d'étirage peut être actionné avec sa première vitesse critique de rotation.
